# EUROPÄISCHE PATENTSCHRIFT

(11) **EP 2 480 469 B1**
(45) Veröffentlichungstag und Bekanntmachung des Hinweises auf die Patenterteilung: **19.06.2013**
(21) Anmeldenummer: 10759810.4
(22) Anmeldetag: 14.09.2010
(51) Int. Cl.: B65G 65/32, B65G 65/36

(54) **SILO MIT EINER BEFÜLLVORRICHTUNG**
SILO HAVING A FILLING DEVICE
SILO PRÉSENTANT UN DISPOSITIF DE REMPLISSAGE

(30) Priorität: 21.09.2009 DE 102009041970
(43) Veröffentlichungstag der Anmeldung: 01.08.2012
(73) Patentinhaber: Claudius Peters Projects GmbH, 21614 Buxtehude (DE)
(72) Erfinder: BUCHFINK, Adolf, 21224 Rosengarten (DE)
(74) Vertreter: Glawe, Delfs, Moll
(86) Internationale Anmeldenummer: PCT/EP2010/005624
(87) Internationale Veröffentlichungsnummer: WO 2011/032680

(56) Entgegenhaltungen:
- AT-B- 392 045
- LU-A1- 85 908
- US-A- 4 603 769

## Beschreibung

Die Erfindung betrifft ein Silo mit einem Siloraum. In dem Silo ist ein Füllrohr zum Zuführen von Schüttgut angeordnet. Das Füllrohr weist eine Mehrzahl von in unterschiedlicher Höhe angeordneten Ventilöffnungen auf. Das Dokument US-A- 4 603 769 offenbart ein Silo nach dem Oberbegriff des Anspruchs 1.

Wenn man ein Silo dadurch befüllt, dass man das Schüttgut durch ein in der Decke des Silos mündendes Rohr in den Siloraum hinein fallen lässt, so induziert der fallende Schüttgutstrom eine Luftbewegung in dem Siloraum. Die Luft wird mit dem Schüttgutstrom nach unten gezogen und steigt in einem von dem Schüttgutstrom entfernten Bereich wieder nach oben. Diese Luftbewegung führt dazu, dass in dem Schüttgut feinere Partikel von gröberen Partikeln getrennt werden. Die feineren Partikel werden von dem Luftstrom mitgeführt und lagern sich in erster Linie dort ab, wo die Luft wieder nach oben steigt. Bei einem Silo beispielsweise, bei dem der Schüttgutstrom in der Mitte zugeführt wird, konzentrieren sich die feineren Partikel in der Nähe der Außenwand. Eine solche Segregation des Schüttguts ist unerwünscht.

Es ist bekannt, dass in dem Silo ein Füllrohr vorgesehen sein kann, durch das das Schüttgut dem Siloraum zugeführt wird. In dem Füllrohr sind jeweils mehrere Öffnungen vorgesehen, die in unterschiedlicher Höhe angeordnet sind. Der Schüttgutstrom tritt jeweils durch die unterste Öffnung aus, die noch oberhalb des Füllstands des Schüttguts in dem Siloraum ist. Die jeweils höher liegenden Öffnungen sind mit einem Ventilmechanismus verschlossen. Die Fallhöhe zwischen der untersten Öffnung und dem Schüttgut im Siloraum ist klein, so dass eine Segregation des Schüttguts nicht stattfindet. Silos dieser Art sind sowohl bekannt in einer Ausführungsform, bei der mehrere Füllrohre in der Nähe der Außenwand angeordnet sind (WO 00/51924 A1), als auch in einer Ausführungsform mit einem zentralen Füllrohr ("An antisegregation tube to counteract air current segregation", von Are Dyroy und Gisle G. Enstad, Seiten 27 bis 30, POSTEC Newsletter No. 16, Dez. 1997). Mit größer werdenden Silos wirken beim Entleeren erhebliche Kräfte auf die Füllrohre. Die Füllrohre selbst oder die Ventilmechanismen können Schaden nehmen.

Der Erfindung liegt die Aufgabe zu Grunde, ein Silo vorzustellen, bei dem auch große Mengen Schüttgut eingetragen und abgezogen werden können, ohne dass das Silo Schaden nimmt. Ausgehend vom eingangs genannten Stand der Technik wird die Aufgabe gelöst durch die Merkmale des unabhängigen Anspruchs 1. Vorteilhafte Ausführungsformen finden sich in den Unteransprüchen.

Erfindungsgemäß ist das Füllrohr in einer Zuführkammer angeordnet, die durch eine Trennwand von dem Siloraum getrennt ist. In der Trennwand ist eine Mehrzahl von in unterschiedlicher Höhe angeordneten Austrittsöffnungen vorgesehen.

Zunächst werden einige Begriffe erläutert. In einem Füllrohr bewegt sich das Schüttgut unter dem Einfluss der Schwerkraft nach unten. Das Füllrohr ist in vielen Fällen senkrecht ausgerichtet, möglich sind aber auch Ausführungsformen, bei denen das Füllrohr gegenüber der Vertikalen geneigt ist.

Eine Ventilöffnung bezeichnet eine Öffnung in dem Füllrohr, durch die das Schüttgut nur dann aus dem Füllrohr austritt, wenn das Schüttgut in dem Füllrohr bis auf Höhe der betreffenden Ventilöffnung gestaut ist. Ein in Bewegung befindlicher Schüttgutstrom passiert die Ventilöffnung, ohne dass Schüttgut austritt. Gestautes Schüttgut kann sich nicht mehr weiter nach unten bewegen und rutscht stattdessen durch die Ventilöffnung aus dem Füllrohr heraus.

Beim Befüllen des Silos tritt das Schüttgut zu einem gegebenen Zeitpunkt entweder nur durch eine Ventilöffnung des Füllrohrs hindurch oder durch eine Mehrzahl von Ventilöffnungen, die auf annähernd gleicher Höhe angeordnet sind. Diese aktiven Ventilöffnungen befinden sich unmittelbar oberhalb des Füllstands in der Zuführkammer. Tiefer liegende Ventilöffnungen sind durch das Schüttgut in der Zuführkammer bedeckt. Durch höher liegende Ventilöffnungen tritt das Schüttgut nicht aus. Der Schüttgutstrom tritt aus dem Füllrohr also ausschließlich durch die aktiven Ventilöffnungen aus, die nur wenig oberhalb des Füllstands in der Zuführkammer angeordnet sind. Das Schüttgut hat in der Zuführkammer folglich nur eine geringe Fallhöhe, bei der keine Segregation stattfindet.

Der Füllstand in der Zuführkammer ist abhängig von dem Füllstand im Siloraum. Das Schüttgut rutscht solange aus der Zuführkammer durch die auf der entsprechenden Höhe befindlichen Austrittsöffnungen in den Siloraum nach, bis der Füllstand in der Zuführkammer nur noch etwas höher ist als der Füllstand in dem Siloraum. Auch beim Übergang aus der Zuführkammer in den Siloraum ist die Fallhöhe des Schüttguts also gering, so dass auch hier eine Segregation vermieden wird.

In der Trennwand, die die Zuführkammer umgibt und von dem Siloraum trennt, sind Austrittsöffnungen vorgesehen. Die Austrittsöffnungen können die Form einfacher Durchbrüche haben und frei von beweglichen Teilen sein. Die Trennwand kann deswegen problemlos so gestaltet werden, dass sie hinreichend stabil ist, um den beim Entleeren des Silos auftretenden Kräften standzuhalten.

Damit auch große Materialströme bewältigt werden können, ist in der Zuführkammer vorzugsweise eine Mehrzahl von Füllrohren vorgesehen. Die Füllrohre können nahe der Trennwand angeordnet sein. Sind zusätzlich die Ventilöffnungen der Füllrohre in einer von der Trennwand abgewandten Richtung ausgerichtet, so wird eine gleichmäßige Befüllung der Zuführkammer möglich.

Die Ventilöffnungen können mit einem Ventilmechanismus versehen sein, so dass die Ventilöffnungen einen geöffneten und einen geschlossenen Zustand einnehmen können. Im geöffneten Zustand kann Schüttgut durch die Ventilöffnungen hindurchtreten, im geschlossenen Zustand tritt kein Schüttgut durch die Ventilöffnungen hindurch. Die Ventilöffnungen sind im Normalzustand, also wenn keine äußeren Kräfte wirken, vorzugsweise geschlossen. Erreicht werden kann dies beispielsweise durch eine Klappe, die oberhalb der Ventilöffnung aufgehängt ist und durch die Schwerkraft vor der Ventilöffnung liegt. Bewegt sich ein Schüttgutstrom durch das Füllrohr an der Ventilöffnung vorbei, so entsteht ein Unterdruck, durch den die Klappe noch fester geschlossen wird. Gegebenenfalls kann zusätzlich eine Federkraft vorgesehen sein, die die Ventilöffnung im geschlossenen Zustand hält. Auf der Höhe der aktiven Ventilöffnungen kann der Schüttgutstrom nicht weiter nach unten fallen. Stattdessen wirkt aus dem Schüttgut heraus eine zur Seite gerichtete Kraft auf die Wand des Füllrohrs. Vorzugsweise ist die Ventilöffnung so gestaltet, dass sie sich unter dem Einfluss dieser Kraft öffnet, so dass das Schüttgut aus dem Füllrohr heraus rutschen kann.

In einer alternativen Ausführungsform sind oberhalb der Ventilöffnungen Leitbleche angebracht, die sich von der Wand des Füllrohrs nach innen erstrecken. Durch die Leitbleche wird der Schüttgutstrom so abgelenkt, dass er einen Abstand zur Wand des Füllrohrs hat, wenn er die Ventilöffnung passiert. Erst wenn sich das Schüttgut bis auf die Höhe der Ventilöffnung gestaut hat, tritt es durch die Ventilöffnung aus. Diese Ausführungsform hat den Vorteil, dass sie ohne bewegliche Teile auskommt.

Damit die Fallhöhe beim Übergang aus dem Füllrohr in die Zuführkammer tatsächlich gering bleibt, muss der vertikale Abstand zwischen den Ventilöffnungen klein sein. Der Abstand zwischen dem oberen Ende einer Ventilöffnung und dem unteren Ende der nächst höheren Ventilöffnung ist vorzugsweise kleiner als 1 m, weiter vorzugsweise kleiner als 0,5 m, weiter vorzugsweise kleiner als 0,3 m. Sind die Ventilöffnungen nicht direkt übereinander, sondern seitlich versetzt zueinander angeordnet, so ist auch eine Überlappung in der Höhe möglich. Insbesondere bei einer solchen Überlappung können mehrere Ventilöffnungen gleichzeitig aktiv sein, das Schüttgut also durch mehrere aktive Ventilöffnungen gleichzeitig aus dem Füllrohr austreten.

Auch wenn das Schüttgut durch die Austrittsöffnungen von der Zuführkammer in den Siloraum übergeht, soll die Fallhöhe gering sein. Für den vertikalen Abstand der Austrittsöffnungen untereinander sowie für den Abstand zwischen der untersten Austrittsöffnung und dem Boden des Siloraums gilt deswegen Entsprechendes. Die unterste Ventilöffnung ist vorzugsweise knapp oberhalb der untersten Austrittsöffnung angeordnet. Für die Stabilität der Konstruktion ist es vorteilhaft, wenn die Trennwand und das Füllrohr eine Verbindung zum Boden des Silos aufweisen. Insbesondere beim Füllrohr ist es auch möglich, dass dieses nach unten offen ist. Die Austrittsöffnungen sind vorzugsweise so über den Umfang der Zuführkammer verteilt, dass sich der Siloraum gleichmäßig füllt. Beispielsweise können auf einer Höhe 10 bis 20 Austrittsöffnungen über den Umfang der Zuführkammer verteilt sein.

Das Silo soll so ausgelegt sein, dass sich beim Befüllen ein konstanter Schüttgutstrom aus dem Füllrohr über die Zuführkammer in den Siloraum ergibt, ohne dass sich das Schüttgut in einer der Komponenten staut. Das Füllrohr sollte deswegen so ausgelegt sein, dass der in dem Füllrohr maximal mögliche Schüttgutstrom durch die aktiven Ventilöffnungen austreten kann. Vorzugsweise ist der maximale Schüttgutstrom durch die aktiven Ventilöffnungen um mindestens 10% größer als der maximale Schüttgutstrom durch das Füllrohr. Der maximale Schüttgutstrom von der Zuführkammer in den Siloraum sollte wiederum so groß sein, dass sich das Schüttgut auch in der Zuführkammer nicht stauen kann.

Bei dem erfindungsgemäßen Silo lässt sich der Siloraum nicht bis zu einer gleichmäßigen Füllhöhe befüllen. Vielmehr ist der Füllstand in der Nähe der Zuführkammer am höchsten und wird mit größer werdendem Abstand von der Zuführkammer geringer. Die Neigung in der Oberfläche des Schüttguts entspricht dem Schüttgutwinkel des Materials. Bei Tonerde für die Aluminiumsproduktion, für die das erfindungsgemäße Silo besonders gut geeignet ist, beträgt der Schüttgutwinkel ungefähr 30°. Das Dach des Silos kann entsprechend dem Schüttgutwinkel des zu lagernden Materials geneigt sein. Vorzugsweise ist die Zuführkammer von der Außenwand beabstandet bzw. im Zentrum des Silos angeordnet, so dass das Dach dort seine größte Höhe hat und zu den Seiten hin abfallen kann.

Möglich ist es auch, in dem Siloraum eine Mehrzahl von Zuführkammern vorzusehen. Dies kann insbesondere dann vorteilhaft sein, wenn ein bereits bestehendes Silo, das eine geringe Höhe, aber eine große Flächenausdehnung hat, gemäß der Erfindung nachgerüstet wird. Mit einer einzelnen Zuführkammer könnte ein solches Silo aufgrund des Schüttgutwinkels nur zu einem kleinen Teil gefüllt werden.

Die Vorteile des erfindungsgemäßen Silos kommen insbesondere dann zur Geltung, wenn große Mengen an Schüttgut gelagert werden sollen bzw. große Mengen an Material in kurzer Zeit hinzugefügt oder abgezogen werden sollen. Das Volumen des Silos ist vorzugsweise größer als 10.000 m³, weiter vorzugsweise größer als 20.000 m³, weiter vorzugsweise größer als 40.000 m³. Die Kapazität des Silos für Tonerde liegt vorzugsweise zwischen 10.000 t und 150.000 t. Der Durchmesser des Siloraums ist vorzugsweise größer als 40 m, weiter vorzugsweise größer als 60 m, weiter vorzugsweise größer als 80 m. Der Schüttgutstrom, für den das Silo ausgelegt ist, kann beispielsweise 400 t/h betragen. Um diese Menge bewältigen zu können, hat das einzelne Füllrohr vorzugsweise einen Durchmesser von mehr als 10 cm, weiter vorzugsweise von mehr als 20 cm und die Zuführkammer einen Durchmesser von mehr als 1 m, vorzugsweise mehr als 2 m.

Die Erfindung wird nachfolgend unter Bezugnahme auf die beigefügten Zeichnungen anhand einer vorteilhaften Ausführungsform beispielhaft beschrieben. Es zeigen:
- Fig. 1:: einen Querschnitt durch ein erfindungsgemäßes Silo;
- Fig. 2:: einen vergrößerten Ausschnitt aus Fig. 1;
- Fig. 3:: einen Querschnitt durch Fig. 2 entlang der Linie 3 - 3; und
- Fig. 4:: eine Ausführungsform eines erfindungsgemäßen Füllrohrs.

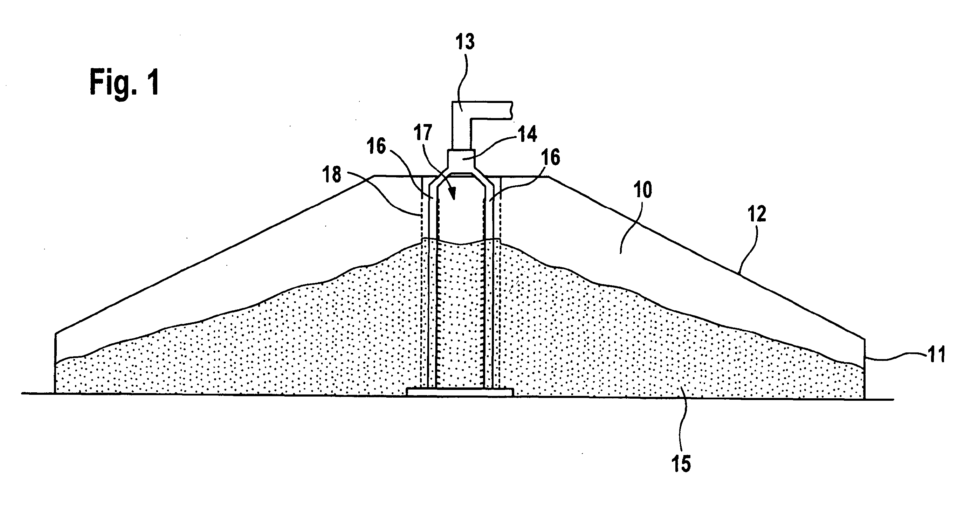

Bei einem für die Lagerung von Tonerde bestimmten Silo in Fig. 1 ist ein im Querschnitt kreisförmiger Siloraum 10 von einer Außenwand 11 umgeben. Der Siloraum 10 hat einen Durchmesser von 100 m. Die Außenwand ist ungefähr 8 m hoch, im Zentrum hat das Silo eine Höhe von ungefähr 25 m. Damit hat das Silo eine Kapazität von mehr als 100.000 t Tonerde, wenn es bis nahe dem Dach 12 gefüllt ist. In Fig. 1 ist das Silo zu ungefähr 70% mit Tonerde als Schüttgut 15 gefüllt, wobei die Füllhöhe entsprechend dem Schüttgutwinkel des Materials vom Zentrum zu der Außenwand 11 hin abfällt. Das Dach 12 des Silos hat eine ungefähr dem Schüttgutwinkel des Materials entsprechende Neigung.

Weiteres Schüttgut 15 wird dem Silo durch eine oben in dem Silo mündende Rohrleitung 13 zugeführt. Über eine Verteilerkammer 14 wird das Schüttgut 15 von der Rohrleitung 13 auf mehrere Füllrohre 16 verteilt. Aus den Füllrohren 16 gelangt das Schüttgut zunächst in eine Zuführkammer 17, die durch eine Trennwand 18 von dem Siloraum 10 getrennt ist. Durch die Trennwand 18 hindurch bewegt sich das Schüttgut 15 von der Zuführkammer 17 in den Siloraum 10. Die Zuführkammer 17 kann freistehend ausgebildet sein. Gegebenenfalls bildet die Zuführkammer eine zusätzliche Stütze für das Dach 12.

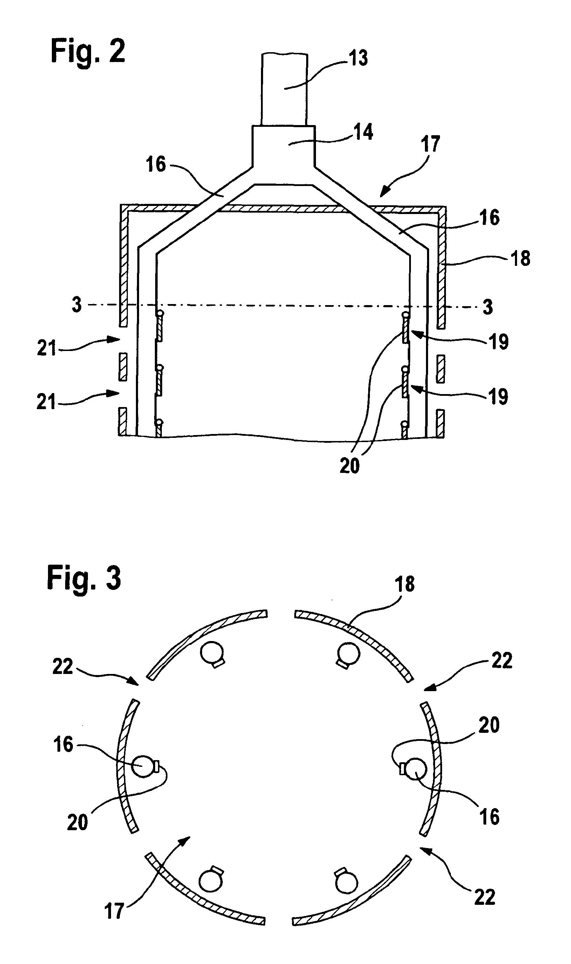

Der obere Abschnitt der Zuführkammer 17 ist in Fig. 2 vergrößert dargestellt. In jedem der Füllrohre 16 ist eine Mehrzahl von Ventilöffnungen 19 übereinander ausgebildet. Bei den Ventilöffnungen 19 ist jeweils eine Öffnung in der Wand des Füllrohrs 16 mit einer Klappe 20 verschlossen. Die Klappe 20 ist oberhalb der Öffnung an der Wand des Füllrohrs 16 angelenkt, so dass sie unter dem Einfluss der Schwerkraft senkrecht nach unten hängt und die Öffnung in der Wand des Füllrohrs 16 verschließt. Alternativ wirkt eine Federkraft auf die Klappe 20, die sie in der geschlossenen Stellung hält.

Die Füllrohre sind von der Trennwand 18 umgeben, durch die die Zuführkammer 17 von dem Siloraum 10 getrennt wird. Die Trennwand 18 ist, wie durch die doppelte Linienführung angedeutet ist, stabil ausgebildet, so dass die Trennwand 18 den in dem Silo auftretenden Belastungen standhalten kann. Diese Belastungen sind insbesondere die Scherkräfte, wenn das Schüttgut 15 parallel zu der Trennwand 18 nach unten rutscht, und Druckkräfte, wenn sich das Schüttgut 15 in dem Siloraum 10 in Querrichtung bewegt. Die Füllrohre 16, die selbst dieser Belastung nicht standhalten würden, sind durch die Trennwand 18 geschützt.

In der Trennwand 18 sind in unterschiedlicher Höhe mehrere Austrittsöffnungen 21 vorgesehen. Die Austrittsöffnungen 21 sind einfache Durchbrüche in der Trennwand 18, die keinerlei bewegliche Teile aufweisen. Auch die Austrittsöffnungen 21 sind damit so gestaltet, dass sie durch die Scherkräfte nicht beeinträchtigt werden. In der Querschnittdarstellung der Fig. 2 entspricht jeder Ventilöffnung 19 eine Austrittsöffnung 21. Die Austrittsöffnung 21 ist jeweils etwas tiefer angeordnet als die Ventilöffnung 19, so dass Schüttgut, das durch eine der Ventilöffnungen 19 in die Zuführkammer 17 eingetreten ist, durch die zugehörige Austrittsöffnung 21 in den Siloraum 10 rutschen kann. Wie Fig. 3 zeigt, sind an anderen Umfangspositionen zwischen den Füllrohren 16 weitere Austrittsöffnungen 22 ausgebildet. Die Austrittsöffnungen 22 sind in anderer Höhe angeordnet als die Austrittsöffnungen 21, es besteht jedoch jeweils eine Überlappung in der Höhe. Für jeden Füllstand in der Zuführkammer 17 gibt es also Austrittsöffnungen 21, 22 in der Trennwand 18, durch die das Schüttgut in den Siloraum 10 rutschen kann. Die Zuführkammer 17 ist im Querschnitt kreisförmig und hat einen Durchmesser von ungefähr 2 m. Die Füllrohre 16 haben ebenfalls einen kreisförmigen Querschnitt und einen Durchmesser von ungefähr 20 cm.

Ist der Siloraum 10 in der unmittelbaren Umgebung der Zuführkammer 17 bis zu einer bestimmten Füllhöhe mit Schüttgut 15 gefüllt, so rutscht das Schüttgut 15 aus der Zuführkammer 17 in den Siloraum 10 nach, bis der Füllstand in der Zuführkammer 17 nur noch wenig höher ist als der Füllstand in den Siloraum 10. Um den Siloraum 10 weiter befüllen zu können, muss die Zuführkammer 17 also mindestens eine dem Siloraum 10 entsprechende Füllhöhe haben. Austrittsöffnungen 21, 22 in der Trennwand 18 und Ventilöffnungen 19 in den Füllrohren 16, die unterhalb dieser Füllhöhe liegen, sind durch das Schüttgut 15 verschlossen. Die höher liegenden Austrittsöffnungen 21, 22 in der Trennwand 18 sind offen und frei durchgängig. Die höher liegenden Ventilöffnungen 19 in den Füllrohren 16 sind im Normalzustand durch die Klappen 20 verschlossen. Wird nun durch die Rohrleitung 13 und die Verteilerkammer 14 weiteres Schüttgut zu den Füllrohren 16 zugeführt, so füllen sich die Füllrohre 16 zunächst bis zu einem der Zuführkammer 17 entsprechenden Füllstand. Steigt der Füllstand in den Füllrohren 16 weiter, so wirkt aus der Säule des Schüttguts 15 heraus eine zur Seite gerichtete Kraft, durch die die Klappe 20 der nächsthöheren Ventilöffnung 19 zur Seite gedrückt wird, so dass sich diese Ventilöffnung 19 öffnet und damit in den aktiven Zustand wechselt. Das Schüttgut 15 kann durch die aktive Ventilöffnung 19 in die Zuführkammer 17 rutschen. Es entsteht ein stetiger Schüttgutstrom von der Verteilerkammer 17 über die Füllrohre 16 und die aktiven Ventilöffnungen 19 in die Zuführkammer 17. Durch den Schüttgutstrom wird ein Unterdruck in den Füllrohren 16 erzeugt, durch den die Ventilöffnungen 19, die von dem Schüttgutstrom passiert werden, geschlossen gehalten werden.

Steigt durch den Schüttgutstrom der Füllstand in dem Siloraum 10 und damit auch der Füllstand in der Zuführkammer 17, so wird die aktive Ventilöffnung 19 durch das Schüttgut in der Zuführkammer 17 bedeckt und verschlossen. Es kann kein weiteres Schüttgut 15 durch diese Ventilöffnung 19 austreten und die Ventilöffnung 19 wird inaktiv. In der Folge steigt der Füllstand in dem Füllrohr 16 an und die nächsthöhere Ventilöffnung 19 wird aktiviert.

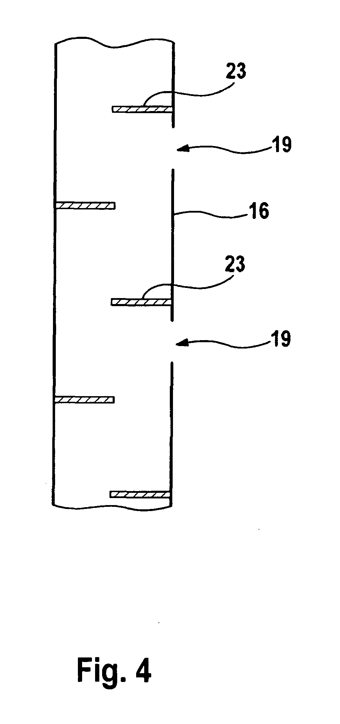

In der Ausführungsform der Fig. 4 sind die Ventilöffnungen 19 als einfache Durchbrüche in der Wand des Füllrohrs 16 ausgebildet. Oberhalb der Ventilöffnungen 19 sind Leitbleche 23 angebracht. Durch das jeweilige Leitblech 23 wird ein durch das Füllrohr 16 fallender Schüttgutstrom so abgelenkt, dass er einen Abstand zu der betreffenden Ventilöffnung 19 einhält und deswegen nicht durch die Ventilöffnung 19 austritt. Erst wenn das Schüttgut 15 in dem Füllrohr 16 bis auf Höhe der Ventilöffnung 19 gestaut ist, rutscht das Schüttgut 15 durch die Ventilöffnung 19 hindurch in die Zuführkammer 17.

Der vertikale Abstand zweier benachbarter Ventilöffnungen 19 beträgt ungefähr 30 cm. Die maximale Fallhöhe, der das Schüttgut 15 beim Übergang aus den Füllrohren 16 in die Zuführkammer 17 ausgesetzt ist, ist also klein. Zwischen den Austrittsöffnungen 21, 22 in der Trennwand 18 besteht in der Höhe eine Überlappung, so dass die Fallhöhe des Schüttguts 15 beim Übergang aus der Zuführkammer 17 in den Siloraum 10 nahe null ist. Bei dem erfindungsgemäßen Silo wird das Schüttgut 15 also von den Füllrohren 16 über die Zuführkammer 17 in den Siloraum 10 geleitet, ohne dass das Schüttgut 15 einer wesentlichen Fallhöhe ausgesetzt ist. Eine Segregation des Schüttguts 15 findet nicht statt.

## Patentansprüche

1. Silo mit einem Siloraum (10) und einem Füllrohr (16) zum Zuführen von Schüttgut (15), wobei das Füllrohr (16) eine Mehrzahl von in unterschiedlicher Höhe angeordneten Ventilöffnungen (19) aufweist, **dadurch gekennzeichnet, dass** das Füllrohr (16) in einer Zuführkammer (17) angeordnet ist, die durch eine Trennwand (18) von dem Siloraum (10) getrennt ist und dass in der Trennwand (18) eine Mehrzahl von in unterschiedlicher Höhe angeordneten Austrittsöffnungen (21, 22) vorgesehen ist.

2. Silo nach Anspruch 1, **dadurch gekennzeichnet, dass** in der Zuführkammer (17) eine Mehrzahl von Füllrohren (16) vorgesehen ist.

3. Silo nach Anspruch 2, **dadurch gekennzeichnet, dass** die Füllrohre (16) nahe der Trennwand (18) angeordnet sind und dass die Ventilöffnungen in einer von der Trennwand (18) abgewandten Richtung ausgerichtet sind.

4. Silo nach einem der Ansprüche 1 bis 3, **dadurch gekennzeichnet, dass** die Ventilöffnungen (19) einen Ventilmechanismus (20) aufweisen.

5. Silo nach Anspruch 4, **dadurch gekennzeichnet, dass** die Ventilöffnungen (19) im Normalzustand geschlossen sind.

6. Silo nach Anspruch 4 oder 5, **dadurch gekennzeichnet, dass** die Ventilöffnungen (19) durch Federkraft im geschlossenen Zustand gehalten werden.

7. Silo nach einem der Ansprüche 1 bis 3, **dadurch gekennzeichnet, dass** oberhalb der Ventilöffnungen (19) Leitbleche (23) angeordnet sind, die sich von der Wand des Füllrohrs (16) nach innen erstrecken.

8. Silo nach einem der Ansprüche 1 bis 7, **dadurch gekennzeichnet, dass** der maximale Schüttgutstrom durch die aktiven Ventilöffnungen (19) größer ist als der maximale Schüttgutstrom durch die Füllrohre (16).

9. Silo nach einem der Ansprüche 1 bis 8, **dadurch gekennzeichnet, dass** der vertikale Abstand zweier benachbarter Ventilöffnungen (19) kleiner ist als 1 m, vorzugsweise kleiner ist als 50 cm, weiter vorzugsweise kleiner ist als 30 cm.

10. Silo nach einem der Ansprüche 1 bis 9, **dadurch gekennzeichnet, dass** die Zuführkammer (17) von einer Außenwand (11) des Siloraums (10) beabstandet ist.

11. Silo nach einem der Ansprüche 1 bis 10, **dadurch gekennzeichnet, dass** das Volumen des Siloraums (10) größer ist als 10.000 m³, vorzugsweise größer ist als 20.000 m³, weiter vorzugsweise größer ist als 40.000 m³.

12. Silo nach einem der Ansprüche 1 bis 11, **dadurch gekennzeichnet, dass** der Siloraum (10) seine größte Höhe im Bereich der Zuführkammer (17) hat.

13. Silo nach einem der Ansprüche 1 bis 12, **dadurch gekennzeichnet, dass** in dem Siloraum (10) eine Mehrzahl von Zuführkammern (17) vorgesehen ist.

## Claims

1. A silo comprising a silo compartment (10) and a filler pipe (16) for feeding in bulk material (15), wherein the filler pipe (16) comprises a plurality of valve openings (19) arranged at different heights, **characterized in that** the filler pipe (16) is arranged in a feed chamber (17) which is separated from the silo compartment (10) by a partition wall (18), and **in that** a plurality of outlet openings (21, 22) arranged at different heights are provided in the partition wall (18).

2. The silo as claimed in claim 1, **characterized in that** a plurality of filler pipes (16) are provided in the feed chamber (17).

3. The silo as claimed in claim 2, **characterized in that** the filler pipes (16) are arranged close to the partition wall (18), and **in that** the valve openings are oriented in a direction opposed to the partition wall (18).

4. The silo as claimed in one of claims 1 to 3, **characterized in that** the valve openings (19) comprise a valve mechanism (20).

5. The silo as claimed in claim 4, **characterized in that** the valve openings (19) are closed in the normal state.

6. The silo as claimed in claim 4 or 5, **characterized in that** the valve openings (19) are held in the closed state by means of spring force.

7. The silo as claimed in one of claims 1 to 3, **characterized in that** baffle plates (23) which extend inwardly from the wall of the filler pipe (16) are arranged above the valve openings (19).

8. The silo as claimed in one of claims 1 to 7, **characterized in that** the maximum bulk material flow through the active valve openings (19) is greater than the maximum bulk material flow through the filler pipes (16).

9. The silo as claimed in one of claims 1 to 8, **characterized in that** the vertical spacing between two adjacent valve openings (19) is less than 1 m, preferably less than 50 cm, more preferably less than 30 cm.

10. The silo as claimed in one of claims 1 to 9, **characterized in that** the feed chamber (17) is situated at a distance from an outer wall (11) of the silo compartment (10).

11. The silo as claimed in one of claims 1 to 10, **characterized in that** the volume of the silo compartment (10) is greater than 10,000 m³, preferably greater than 20,000 m³, more preferably greater than 40,000 m³.

12. The silo as claimed in one of claims 1 to 11, **characterized in that** the silo compartment (10) has its greatest height in the region of the feed chamber (17).

13. The silo as claimed in one of claims 1 to 12, **characterized in that** a plurality of feed chambers (17) are provided in the silo compartment (10).

## Revendications

1. Silo avec un espace de silo (10) et un tube de remplissage (16) pour l'introduction de produit en vrac (15), le tube de remplissage (16) comprenant une pluralité d'ouvertures à soupapes (19) disposées à différentes hauteurs, **caractérisé en ce que** le tube de remplissage (16) se trouve dans une chambre d'alimentation (17) séparée de l'espace de silo (10) par une cloison (18) et **en ce que**, dans la cloison (18) se trouve une pluralité d'ouvertures de sortie (21, 22) disposées à différentes hauteurs.

2. Silo selon la revendication 1, **caractérisé en ce que**, dans l'espace d'alimentation (17) se trouve une pluralité de tubes de remplissage (16).

3. Silo selon la revendication 2, **caractérisé en ce que** les tubes de remplissage (16) se trouvent à proximité de la cloison (18) et **en ce que** les ouvertures à soupapes sont orientées dans une direction opposée à la cloison (18).

4. Silo selon l'une des revendications 1 à 3, **caractérisé en ce que** les ouvertures à soupapes (19) comprennent un mécanisme de soupape (20).

5. Silo selon la revendication 4, **caractérisé en ce que** les ouvertures à soupapes (19) sont fermées dans l'état normal.

6. Silo selon la revendication 4 ou 5, **caractérisé en ce que** les ouvertures à soupapes (19) sont maintenues dans l'état fermé grâce à la force d'un ressort.

7. Silo selon l'une des revendications 1 à 3, **caractérisé en ce que**, au-dessus des ouvertures à soupapes (19), se trouvent des déflecteurs (23) qui s'étendent de la paroi du tube de remplissage (16) vers l'intérieur.

8. Silo selon l'une des revendications 1 à 7, **caractérisé en ce que** le débit maximal de produit en vrac à travers les ouvertures à soupapes actives (19) est supérieur au débit de produit en vrac maximal à travers les tubes de remplissage (16).

9. Silo selon l'une des revendications 1 à 8, **caractérisé en ce que** la distance verticale entre deux ouvertures à soupapes (19) voisines est inférieure à 1 m, de préférence inférieure à 50 cm, de préférence inférieure à 30 cm.

10. Silo selon l'une des revendications 1 à 9, **caractérisé en ce que** la chambre d'alimentation (17) est située à une certaine distance d'une paroi extérieure (11) de l'espace du silo (10) .

11. Silo selon l'une des revendications 1 à 10, **caractérisé en ce que** le volume de l'espace du silo (10) est supérieur à 10.000 m³, de préférence supérieur à 20.000 m³, de préférence supérieur à 40.000 m³.

12. Silo selon l'une des revendications 1 à 11, **caractérisé en ce que** l'espace du silo (10) présente sa hauteur la plus importante au niveau de la chambre d'alimentation (17).

13. Silo selon l'une des revendications 1 à 12, **caractérisé en ce que**, dans l'espace du silo (10) se trouvent une pluralité de chambres d'alimentation (17).
